# EUROPÄISCHE PATENTSCHRIFT

(11) **EP 1 639 275 B1**
(45) Veröffentlichungstag und Bekanntmachung des Hinweises auf die Patenterteilung: **17.09.2008**
(21) Anmeldenummer: 04739224.6
(22) Anmeldetag: 17.05.2004
(51) Int. Cl.: F16H 57/02, F16H 63/30

(54) **LAGERUNGSANORDNUNG FÜR MINDESTENS EIN GETRIEBEZAHNRAD**
BEARING ARRANGEMENT FOR AT LEAST ONE GEARBOX WHEEL
ENSEMBLE PALIER POUR AU MOINS UN ENGRENAGE DE BOITE DE VITESSES

(30) Priorität: 14.06.2003 DE 10326866
(43) Veröffentlichungstag der Anmeldung: 29.03.2006
(73) Patentinhaber: Dr. Ing. h.c. F. Porsche Aktiengesellschaft, 70435 Stuttgart (DE)
(72) Erfinder: SANDER, Edmund, 71229 Leonberg (DE)
(86) Internationale Anmeldenummer: PCT/EP2004/005264
(87) Internationale Veröffentlichungsnummer: WO 2004/111499

(56) Entgegenhaltungen:
- DE-A- 2 447 177
- DE-A- 19 950 584

## Beschreibung

Die Erfindung geht aus von einer Lagerungsanordnung für mindestens ein Getriebezahnrad nach den Merkmalen des Oberbegriffs des Patentanspruchs 1.

Aus der DE- OS 24 47 177 ist eine Lagerung für eine Zwischenwelle in einem Getriebegehäuse bekannt, bei der zur Vereinfachung der Herstellung des Getriebegehäuses vorgeschlagen ist, die das Zahnrad tragende Zwischenwelle an ihrem einen Ende durch eine von außen in einer Führungsbohrung im Getriebegehäuse geführten Schraube zu befestigen.

Weiterhin ist aus der DE 199 50 584 A1 ein Schaltgetriebe bekannt, bei dem zur Lagerung einer Schaltwelle eine Führung vorgesehen ist, die mittels einer Schraube am Getriebegehäuse befestigt ist. Diese Schrift offenbart alle Merkmale des Oberbegriffs des Anspruchs 1.

Aufgabe der Erfindung ist es, insbesondere die Lagerungsanordnung für ein Rückwärtsgang - Umkehrrad hinsichtlich der Herstellungskosten und Montagefreundlichkeit weiter zu verbessern.

Die Aufgabe wird durch die im Anspruch 1 angegebenen Merkmale gelöst.

Die das mindestens eine Zahnrad tragende Getriebeachse ist auf ihrer einen Seite in einem separaten Lagerelement aufgenommen, das von außen über ein Befestigungselement im Getriebegehäuse verschraubt ist. Damit ergeben sich Montagevorteile, da die komplette Einheit aus Zahnrad, Getriebeachse und Lageranordnung vormontiert werden kann, bevor sie im Getriebegehäuse befestigt wird.

Durch die in den Unteransprüchen aufgeführten Maßnahmen sind weitere vorteilhafte Ausgestaltungen und Weiterbildungen der erfindungsgemäßen Lagerungsanordnung möglich.

In einer Getriebegehäuse - Innenwand ist eine erste Ausnehmung zur Anlage bzw. Aufnahme des Lagerelementes vorgesehen, wobei die Innenkontur der Ausnehmung der mindestens teilweise kreisbogenförmig ausgebildeten Außenkontur des Lagerelementes angepasst ist. Damit ist eine formschlüssige Aufnahme des Lagerelementes sowie eine achsparallele Ausrichtung der Getriebeachse zu der bzw. den parallel dazu verlaufenden Getriebewellen sicher gestellt.

Zur axialen Justierung des als Lagerbock ausgebildeten Lagerelementes ist am Lagerelement ein Führungspin vorgesehen, der in einer zweiten Ausnehmung in der Innenwand des Getriebegehäuses geführt ist. Die Ausnehmung weist einen Endanschlag auf, der so positioniert ist, dass das Bohrungsloch im Getriebegehäuse zur Aufnahme der Befestigungsschraube mit dem im Lagerbock vorgesehenen Gewinde axial übereinstimmt.

Als axiale Anlagefläche für das Zahnrad weist die Getriebeachse auf vorteilhafte Art und Weise zwischen Lagerelement und Zahnrad einen größeren Achsdurchmesser auf.

Ein Ausführungsbeispiel der Erfindung ist in der nachfolgenden Beschreibung und Zeichnung näher erläutert.

Es zeigen:

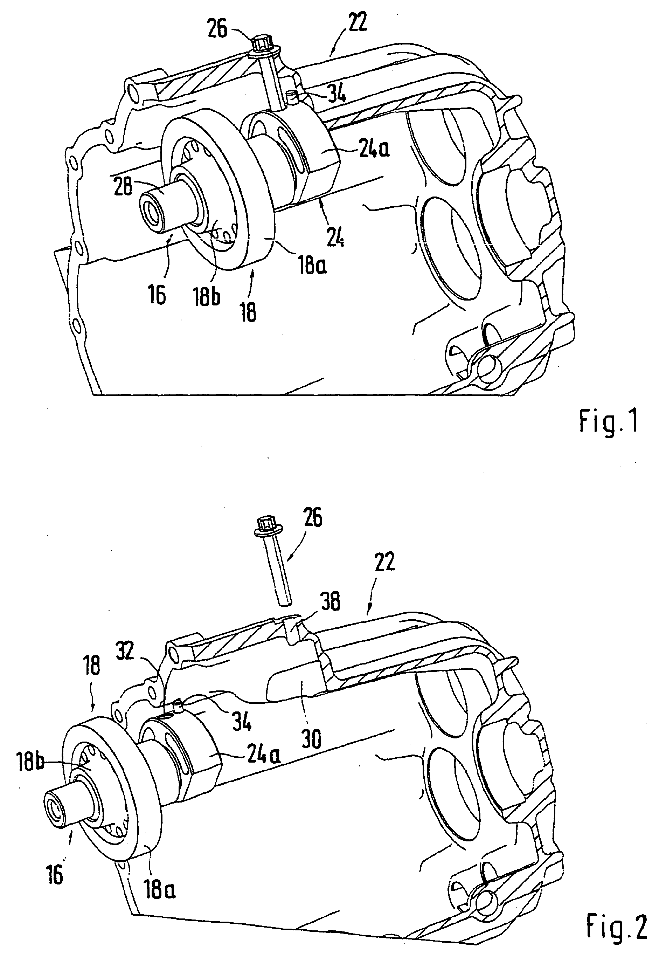

- Fig. 1: eine erste Ansicht eines aufgeschnittenen Getriebegehäuses,
- Fig. 2: eine zweite Ansicht des aufgeschnittenen Getriebegehäuses,

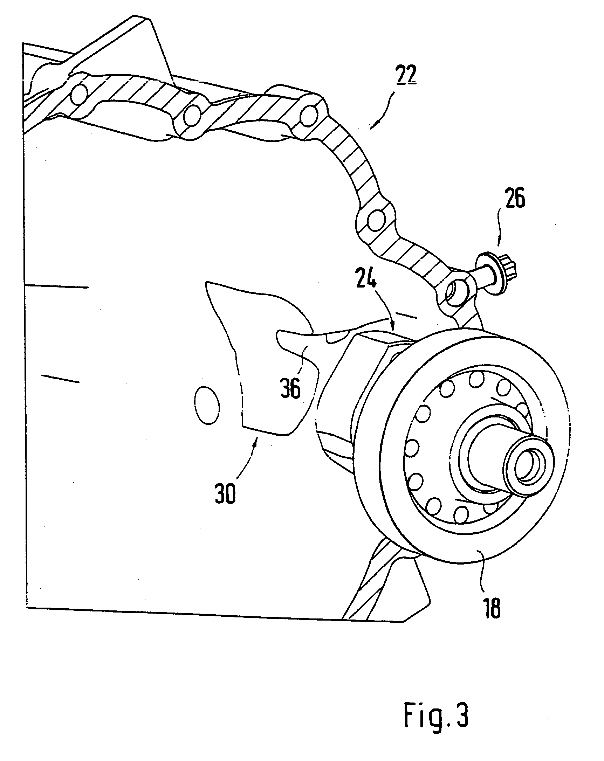

- Fig. 3: eine dritte Ansicht des aufgeschnittenen Getriebegehäuses und
- Fig. 4: die Radsatzanordnung eines Drei - Wellen - Getriebes.

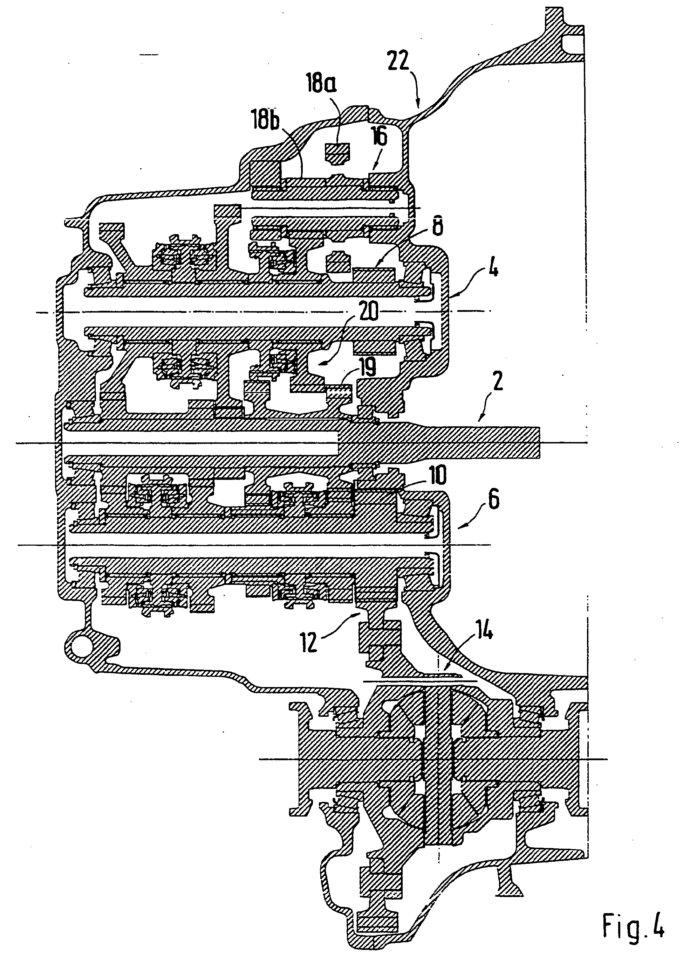

Fig. 4 zeigt die Radsatzanordnung eines Drei - Wellen - Getriebes, bei der neben einer Getriebeeingangswelle 2 zwei Getriebeausgangswellen 4 und 6 vorgesehen sind, die beide jeweils über ein Zahnrad 8 und 10 mit dem Tellerrad 12 eines Achsdifferenzials 14 in Verbindung stehen. Für die Umsetzung eines Rückwärtsganges ist zur Drehrichtungsumkehr eine Getriebeachse 16 vorgesehen, auf der ein drehbar gelagertes Zahnrad 18 mit zwei nebeneinander liegenden Zahnradkränzen 18a und 18b drehbar gelagert ist. Das Zahnrad 20 wird eingangsseitig über den Zahnkranz 18a, der kämmend mit einem auf der Getriebeeingangswelle 2 angeordneten Zahnrad 19 im Eingriff steht, angetrieben. Über den Zahnkranz 18b, der kämmend mit einem auf der Getriebeausgangswelle 4 angeordneten und über die Schaltkupplung 21 schaltbaren Zahnrad 20 im Eingriff steht, wird der Kraftfluss über das Zahnrad 18 auf die Getriebeausgangswelle 4 übertragen und somit eine Drehrichtungsumkehr der Getriebeausgangswelle 4 erreicht.

Die Getriebeachse 16 ist in einem Getriebegehäuse 22 befestigt, wobei der Aufbau bzw. die Lagerung der Getriebeachse 16 im nachfolgenden näher erläutert ist. Die Getriebeachse 16 ist an ihrem einen Ende in einem als Lagerbock 24 ausgebildeten Lagerelement drehfest eingesteckt, wobei der Lagerbock 24 im eingebauten Zustand der Getriebeachse 16 mit Hilfe einer Schraube 26 innerhalb des Getriebegehäuses 22 befestigt ist. Das andere Ende 28 der Getriebeachse 16 ist in einem nicht dargestellten Getriebegehäusedeckel aufgenommen. Der aus beispielsweise einem Strangpressprofil hergestellte Lagerbock 24 weist eine kreisbogenförmig ausgebildete Außenkontur 24a auf, die im eingebauten Zustand in einer Ausnehmung 30 des Getriebegehäuses 22 Aufnahme findet, wobei die Innenkontur der Ausnehmung 30 ebenfalls kreisbogenförmig ausgebildet und der Außenkontur 24a des Lagerbocks 24 angepasst ist. In der kreisbogenförmig ausgebildeten Außenkontur 24a ist einerseits das Gewinde zur Aufnahme der Schraube 26 eingebracht, andererseits ist seitlich versetzt zur Gewindebohrung 32 ein Führungspin 32 vorgesehen, der in einer im Getriebegehäuse 22 ausgebildeten zweiten Ausnehmung 36 geführt ist. Die Ausnehmung 36 und der Führungspin 34 sind so dimensioniert bzw. ausgerichtet, dass letzterer am Ende der konisch verlaufenden Ausnehmung 36 festsitzt bzw. anschlägt, wenn die Gewindebohrung 32 mit der im Getriebegehäuse 22 vorgesehenen Öffnung 38 zur Aufnahme der Schraube 26 in Überdeckung gebracht ist. Damit ist auf einfache Art und Weise eine selbstfindende Position zur Befestigung des Lagerbocks 24 der Getriebeachse 16 im Getriebegehäuse 22 erreicht. Zwischen dem Zahnrad 18 und dem Lagerbock 24 ist die Getriebeachse 16 mit einem größeren Achsdurchmesser versehen, der als axiale Anlagefläche für das Zahnrad 18 dient.

## Patentansprüche

1. Lagerungsanordnung für mindestens ein Getriebezahnrad, insbesondere für ein Rückwärtsgang - Umkehrrad in einem Getriebegehäuse eines Wechselgetriebes, mit einem auf einer Getriebeachse drehbar gelagerten Zahnrad, wobei die Getriebeachse mindestens an einem Ende im Getriebegehäuse befestigt bzw. gelagert ist, wobei die Getriebeachse (16) auf ihrer einen Seite in einem Lagerelement (24) aufgenommen ist, das von außen über ein Befestigungselement (26) im Getriebegehäuse (22) verschraubt ist, wobei
in der Getriebegehäuse - Innenwand eine erste Ausnehmung (30) zur Anlage bzw. Aufnahme des Lagerelementes (24) vorgesehen ist, dessen Innenkontur der mindestens teilweise kreisbogenförmig ausgebildeten Außenkontur (24a) des Lagerelementes (24) angepasst ist, **dadurch gekennzeichnet, dass** zur axialen Justierung des als Lagerbock ausgebildeten Lagerelementes (24) bzw. der Getriebeachse (16) ein am Lagerelement (24) befestigter Führungspin (34) vorgesehen ist, der in einer zweiten Ausnehmung (36) in der Innenwand des Getriebegehäuses (22) geführt ist.

2. Lagerungsanordnung nach Anspruch 1, **dadurch gekennzeichnet, dass** die Getriebeachse (16) als axiale Anlagefläche für das Zahnrad (18) zwischen Lagerelement (24) und Zahnrad (18) einen größeren Achsdurchmesser aufweist.

## Claims

1. Bearing arrangement for at least one gearbox gearwheel, in particular for a reverse-gear reversing wheel in a gearbox housing of a variable-speed gearbox, having a gearwheel which is mounted rotatably on a gearbox axle, the gearbox axle being fastened or mounted at least at one end in the gearbox housing, the gearbox axle (16) being received on its one side in a bearing element (24) which is screwed in the gearbox housing (22) from the outside via a fastening element (26), a first recess (30) being provided in the inner wall of the gearbox housing for contact with or receiving the bearing element (24), the inner contour of which is adapted to the outer contour (24a) of the bearing element (24) of at least partially circularly arcuate configuration, **characterized in that,** in order to adjust axially the gearbox axle (16) or the bearing element (24) which is configured as a bearing block, a guide pin (34) is provided which is fastened to the bearing element (24) and is guided in the second recess (36) in the inner wall of the gearbox housing (22).

2. Bearing arrangement according to Claim 1, **characterized in that** the gearbox axle (16) has a greater axial diameter between the bearing element (24) and the gearwheel (18) as an axial bearing face for the gearwheel (18).

## Revendications

1. Ensemble palier pour au moins un engrenage de boîte de vitesses, en particulier pour un engrenage d'inversion de marche arrière dans un carter de boîte de vitesses à changement de vitesse, comprenant un engrenage monté à rotation sur un axe de boîte de vitesses, l'axe de boîte de vitesses étant fixé ou monté au moins à une extrémité dans le carter de boîte de vitesses, l'axe de boîte de vitesses (16) étant reçu sur l'un de ses côtés dans un élément de palier (24) qui est vissé depuis l'extérieur par-dessus un élément de fixation (26) dans le carter de boîte de vitesses (22),
un premier évidement (30) étant prévu dans la paroi intérieure du carter de boîte de vitesses pour supporter ou pour recevoir l'élément de palier (24), dont le contour intérieur est adapté au contour extérieur (24a) de l'élément de palier (24), réalisé au moins en partie en forme d'arc de cercle, **caractérisé en ce que** pour l'ajustement axial de l'élément de palier (24) réalisé sous forme de coussinet ou de l'axe de boîte de vitesses (16), on prévoit une broche de guidage (34) fixée sur l'élément de palier (24), qui est guidée dans un deuxième évidement (36) dans la paroi intérieure du carter de boîte de vitesses (22).

2. Ensemble palier selon la revendication 1, **caractérisé en ce que** l'axe de boîte de vitesses (16) présente, en tant que surface d'appui axiale pour l'engrenage (18) entre l'élément de palier (24) et l'engrenage (18), un relativement grand diamètre d'axe.
